# EUROPÄISCHE PATENTSCHRIFT

(11) **EP 2 221 681 B1**
(45) Veröffentlichungstag und Bekanntmachung des Hinweises auf die Patenterteilung: **29.03.2017**
(21) Anmeldenummer: 09153168.1
(22) Anmeldetag: 19.02.2009
(51) Int. Cl.: G05B 19/00, G05B 19/418, G06F 9/44, G06F 9/445

(54) **Engineering System zur Programmierung einer Steuerung und zur Parametrierung von Feldgeräten**
Engineering system for programming a control and setting the parameters of field devices
Système d'ingénierie destiné à la programmation d'une commande et au paramétrage d'appareils de terrain

(43) Veröffentlichungstag der Anmeldung: 25.08.2010
(73) Patentinhaber: Siemens Aktiengesellschaft, 80333 München (DE)
(72) Erfinder: Turnaus, Andre, 90562 Heroldsberg (DE)

(56) Entgegenhaltungen:
- EP-A- 1 577 724
- US-A1- 2007 088 518
- US-A1- 2007 244 583

## Beschreibung

Die Erfindung betrifft ein Engineering System zur Programmierung einer Steuerung und zur Parametrierung von Feldgeräten.

Im Bereich der industriellen Automatisierungstechnik werden Steuerungen sowie Feldgeräte eingesetzt. Moderne und komplexe Feldgeräte (z.B. Sicherheitsschaltgeräte, Motormanagementsysteme) zeichnen sich u.a. dadurch aus, dass sie eine Vielzahl an Parameter besitzen. Durch diese Parameter können sie an die konkreten Einsatzbedingungen im Feld angepasst werden (z.B. Stromgrenzwerte, Alarmschwellen, interne Zeitbausteine, interne Zähler, etc.). Diese Geräteparameter werden vom Projekteur der Anlage mit Hilfe eines Engineering Systems festgelegt und anschließend auf das Gerät geladen. Hierfür steht dem Projekteur meist ein Engineering System zur Verfügung, welches eine dialogbasierte Parametrierung bzw. eine graphische Parametrierung ermöglicht. Steuerungen (z.B. SPS, IPC, CNC) sind in der Lage, vom Anwender erstellte Steuerungsprogramme zyklisch abzuarbeiten. Auf diese Weise lassen sich der Steuerung frei definierbare Steuerungsfunktionen zuweisen. Hierbei ergeben sich wiederum für den Projekteur unterschiedliche Möglichkeiten mit Hilfe eines Engineering Systems ein Steuerungsprogramm zu erstellen. Der Projekteur kann beispielsweise auf klassische SPS Sprachen (z.B. KOP, FUP, AWL), Hochsprachen (z.B. SCL), sowie auf eine grafische Programmierung über Funktionspläne (CFC, Continuous Function Chart) zurückgreifen. Bei der grafischen Programmierung werden vorgefertigte Funktionsbausteine in einem Plan miteinander verschaltet. Die Pläne werden anschließend von dem Engineering System im Steuerungsprogramm übersetzt und auf das Zielsystem (CPU) geladen.

Die US 2007/0088518 A1 offenbart ein automatisiertes Verfahren zum Erzeugen von Programmmodulen zur Steuerung von Feldgeräten aus einer maschinenlesbaren parametrisierten Beschreibung der Feldgeräte. Die maschinenlesbare parametrisierte Beschreibung wird anhand einer textuell niedergelegten Beschreibung gebildet. Das Programmmodul (die Firmware) eines Feldgerätes wird somit nicht mehr direkt durch die textuell niedergelegte Beschreibung gebildet, sondern anhand der maschinenlesbaren parametrisierten Beschreibung.

Der Erfindung liegt die Aufgabe zugrunde, eine einfache und verbesserte Parametrierung von Feldgeräten sowie Programmierung einer Steuerung zu ermöglichen.

Die Lösung der gestellten Aufgabe gelingt durch ein Engineering System gemäß Anspruch 1.

Verschaltungsrelevante Geräteparameter können Parameter der Feldgeräte sowie Parameter der Steuerung sein.

Durch das erfindungsgemäße Engineering System muss ein Projekteur zur Parametrierung von Feldgeräten und zur Programmierung von Steuerungen nicht mehr zwei Engineering Systeme besitzen und zudem beherrschen, sondern es genügt wenn er sich mit dem erfindungsgemäßen Engineering System auseinander setzt. Üblicherweise gibt es jeweils ein Engineering System zur Parametrierung von Feldgeräten sowie ein anderes Engineering System zur Programmierung einer Steuerung. Für die Feldgeräte gibt es Engineering Systeme wie beispielsweise SIMOCODE ES oder MSS ES. Hierbei werden dem Projekteur alle Parameter eines Gerätes zur Einstellung angeboten. Darüber hinaus wird dem Projekteur ein Grafikeditor angeboten, über den die Parametrierung grafisch vorgenommen werden kann. Der Grafikeditor ist als Komponente in das jeweilige "Feldgeräte Engineering System" integriert. Ein Engineering System für eine Steuerung wie z.B. Step 7 kann einen CFC Editor aufweisen. Der CFC-Editor bietet als Zusatzpaket die Möglichkeit, ein Steuerungsprogramm grafisch zu erstellen. Nachteilig hierbei ist jedoch, dass ein Projekteur mit zwei unterschiedlichen Engineering Systemen arbeiten muss. Zudem ist der Großteil dieser Engineering Systeme unterschiedlich aufgebaut und weist eine unterschiedliche grafische Benutzeroberfläche zur grafischen Programmierung bzw. Parametrierung auf. Des Weiteren müssen zwei Engineering Systeme erworben, installiert und auf dem aktuellen Stand gehalten werden. Ein Projekteur muss sich somit innerhalb zwei unterschiedlicher komplexer Programme zurechtfinden. Dies ist bei dem erfindungsgemäßen Engineering System nicht der Fall. Der Benutzer muss sich lediglich mit einem Engineering System auseinandersetzten.

Ein weiterer großer Vorteil des erfindungsgemäßen Engineering Systems ist, dass insbesondere das Synchronisationsmittel dafür sorgt, dass verschaltungsrelevante Geräteparameter mit den Verschaltungsinformationen synchronisiert werden. Die Parametrierung der Feldgeräte hat oft eine direkte Auswirkung auf die Programmierung der Steuerung. Solche "zwingende" Zustände werden durch das Synchronisationsmittel automatisch synchronisiert. Dem Projekteur wird hierdurch enorm die Arbeit erleichtert und das Engineering System sorgt zusätzlich dafür, dass das Fehlerpotential minimiert wird. Dies ist bei herkömmlichen Engineering Systemen nicht der Fall. Der Projekteur muss dies bei der Parametrierung bzw. Programmierung im jeweiligen Engineering System beachten. Bei komplexen Systemen stellt dies eine große Herausforderung für den Projekteur dar und birgt somit große Fehlerquellen.

Ein weiterer enormer Vorteil ist, dass durch die Verknüpfung der beiden Engineering Systeme (Steuerung und Feldgeräte) ein Engineering System generiert wird und somit, durch die einheitliche Architektur und das Arbeiten in nur einem System, zukünftige Innovationen im Editorbereich direkt in "beide" Systeme fließen. Bei den herkömmlichen Systemen, welche parallel entwickelt werden, kommt es erfahrungsgemäß eher zu einem "auseinanderlaufen von Komponentenentwicklungen".

Das Editieren der Verschaltungsinformationen kann hierbei beispielsweise dialogbasiert (Graphikparameter werden in Listen bzw. Masken dargestellt und können durch eine Eingabe des Projekteurs geändert werden), graphisch (Funktionsbausteine können in einem Verschaltungsplan verschaltet werden) oder durch Eingabe des Quellcodes des Engineering Systems erfolgen.

In einer Ausführungsform der Erfindung weist das Engineering System einen Geräteparameter-Manager zum Lesen und Editieren der verschaltungsrelevanten Geräteparameter auf.

Der Geräteparameter-Manager sollte verschaltungsrelevante Geräteparameter der Steuerung und insbesondere verschaltungsrelevante Geräteparameter der Feldgeräte lesen und editieren können. Verschaltungsrelevante Geräteparameter können somit Geräteparameter der Feldgeräte sowie Geräteparameter der Steuerung sein. Diese verschaltungsrelevanten Geräteparameter sind Bestandteil der Verschaltungsinformationen. Die Verschaltungsinformationen können mithilfe der graphischen Benutzeroberfläche visualisiert und editiert werden. Der Benutzer kann somit hierüber Feldgeräte parametrieren sowie Steuerungen programmieren. Aus den Verschaltungsinformationen kann mithilfe des Steuerungs-Managers ein Steuerungsprogramm für die Steuerung generiert werden. Verschaltungsinformationen sowie verschaltungsrelevante Geräteparameter können durch das Synchronisationsmittel synchronisiert (abgeändert bzw. generiert) werden.

Der Geräteparameter-Manager kann nun mithilfe der verschaltungsrelevanten Geräteparameter z.B. ein Feldgerät editieren aber auch die verschaltungsrelevanten Geräteparameter von einem Feldgerät lesen. Des Weiteren können die verschaltungsrelevanten Geräteparameter innerhalb des Engineering Systems abgespeichert sein. In diesem Fall kann der Geräteparameter-Manager die verschaltungsrelevanten Geräteparameter des Engineering Systems lesen und editieren, welche letztendlich zur Parametrierung der Feldgeräte herangezogen werden sollten. Die verschaltungsrelevanten Geräteparameter dienen somit insbesondere der Parametrierung der Feldgeräte sowie der Bildung der Verschaltungsinformationen für die Visualisierung auf der graphischen Benutzeroberfläche. Dadurch, dass eine Synchronisierung verschaltungsrelevanter Geräteparameter der Feldgeräte mit den Verschaltungsinformationen stattfindet, können die aktuellen Zustände bzw. Einstellungen der Feldgeräte gewährleistet werden. Eine Änderung seitens der Verschalungsinformation über die graphische Benutzeroberfläche kann sich somit direkt auf die verschaltungsrelevanten Geräteparametern auswirken und umgekehrt. In analoger Weise sollte ein Abgleich mit den verschaltungsrelevanten Geräteparametern der Steuerung möglich sein.

Der Geräteparameter-Manager bildet somit innerhalb des Engineering Systems eine Schnittstelle für die Parametrierung der Feldgeräte und der Beschaffung der Geräteparameter. Diese Geräteparameter und insbesondere die verschaltungsrelevanten Geräteparameter können durch das Synchronisationsmittel mit den Verschaltungsinformationen synchronisiert werden. Der Projekteur kann über die graphische Benutzeroberfläche die Feldgeräte parametrieren und die Steuerung programmieren und somit die Verschaltungsinformationen editieren.

Auf diese Weise können innerhalb des Engineering Systems zwei Subsysteme (Geräteparameter-Manager und Steuerung-Manager) existieren, wobei der Benutzer (Projekteur) sich lediglich mit einem System, nämlich dem Engineering System auseinander setzen muss. Die Datenaufbereitung sowie die Datenverarbeitung der Verschaltungsinformationen, die durch die graphische Benutzeroberfläche erfolgt, wird hierbei von dem Engineering System übernommen. Mithilfe des Synchronisationsmittels können Daten, welche sowohl für die Steuerung, d.h. dem Steuerungs-Manager, als auch für das Feldgerät, d.h. dem Geräteparameter-Manager, relevant sind zusammengeführt werden.

Des Weiteren sollte der Geräteparameter-Manager, verschaltungsrelevante Geräteparameter einer Steuerung lesen und editieren können. Somit kann der Geräteparameter-Manager die verschaltungsrelevanten Geräteparameter der Steuerung ebenso mit dem Verschaltungsinformationen synchronisieren.

In einer weiteren Ausführungsform der Erfindung ist der Geräteparameter-Manager dazu ausgeführt, die verschaltungsrelevanten Geräteparameter aus einer Gerätebeschreibungsdatei, welche auf einem Gerät untergebracht ist, zu lesen und zu editieren.

Das Gerät kann hierbei ein Feldgerät sowie eine Steuerung sein. Zu jedem Gerät, das im Engineering System zur Projektierung angeboten wird, sollte eine Gerätebeschreibungsdatei existieren. Diese Gerätebeschreibungsdatei kann auch aus mehreren Einzeldateien bestehen. Mit Hilfe dieser Gerätebeschreibungsdatei ist der Funktionsumfang des Gerätes (z.B. ein bestimmtes Feldgerät, eine bestimmte Steuerung) definiert. Hierbei sollten alle Parameter des Gerätes mit ihren Defaultwerten und Wertgrenzen aufgeführt sein. Diese Gerätebeschreibungsdatei wird vom Engineering System und letztendlich von dem Geräteparameter-Manager ausgewertet, um z.B. entsprechende Dialogmasken zu generieren, in denen der Projekteur die gerätspezifischen Parameter einstellen kann. Innerhalb der Gerätebeschreibungsdatei sollten ebenso Parameterabhängigkeiten hinterlegt sein, die bei der Parametrierung berücksichtigt werden müssen. Daten für eine Gerätebeschreibungsdatei sind beispielsweise in einer sogenannten Electronic Device Description (EDD) hinterlegt.

Um eine graphische Parametrierung sowie Programmierung zu ermöglichen sollten neben der reinen Parameterbeschreibung auch Daten zur Funktionsblockbildung innerhalb der Gerätebeschreibungsdatei hinterlegt sein. Diese Beschreibung für die Funktionsblöcke kann somit als Erweiterung der Gerätebeschreibungsdatei aufgefasst werden, welche dem Engineering System als Datengrundlage für die grafische Parametrierung dient. In dieser Funktionsblockbeschreibung sollten folgende Informationen hinterlegt sein:
1. Menge an Eingangsparametern, die zu einem Funktionsblock gehören (0-n Eingänge). Diese Parameter werden als verschaltbare Eingänge auf der Blockeingangsseite dargestellt.
2. Menge an Ausgangsparametern, die zu einem Funktionsblock gehören (0-n Ausgänge). Diese Parameter werden als verschaltbare Ausgänge auf der Blockausgangsseite dargestellt.
3. Menge an nicht verschaltbaren Blockparametern. Diese Parameter werden ebenfalls im Block dargestellt. Von ihnen kann keine Verschaltung ausgehen, sie erhalten lediglich einen Parameterwert, der visualisiert wird.
4. Zusatzinformationen zur Steuerung innerhalb der graphischen Benutzeroberfläche. Dies kann beispielsweise die Anzahl der Instanzen, die gebildet werden können (d.h. wie oft kann der Block im Plan verwendet werden), Anschluss (Ein-/Ausgang) ist aktiv/inaktiv, Zuordnung eines Geräteparameters zu einem Anzeigeelement (z.B. der Geräteparameter "Elementkommentar" wird auf das Kommentarfeld des Blocks abgebildet) sein.

In der Vergangenheit wurden die Metadaten für Grafikeditoren in separaten Metadateien (z.B. XML-Files) abgelegt. Bei dieser Ausführungsform hingegen sollten diese Grafikinformationen Bestandteil der Device Description und auch mit Hilfe der Sprachkonstrukte dieser Device Description verfasst sein. Dies hat den Vorteil, dass keine "Zusatzdatei" verwendet werden muss, sondern mithilfe eines bereits existierenden Datenformates, welches bereits in nahezu allen relevanten Feldgeräten implementiert ist, verwendet werden kann.

Die Gerätebeschreibungsdatei eines Feldgerätes und einer Steuerung weist somit verschaltungsrelevante Geräteparameter (spielen bei einer graphischen Parametrierung eine Rolle) und nicht verschaltungsrelevante Geräteparameter (spielen bei einer graphischen Parametrierung keine Rolle) auf. Die nicht verschaltungsrelevanten Geräteparametern müssen somit auch nicht mit Hilfe des Synchronisationsmittels synchronisiert werden. Dies reduziert die zu synchronisierende Datenmenge und steigert die Performance.

Der Geräteparameter-Manager bedient sich somit der Gerätebeschreibungsdateien. Die verschaltungsrelevanten Geräteparameter dienen der Bildung der Verschalungsinformationen. Sofern die Verschaltungsinformationen seitens des Projekteurs geändert werden bzw. sich die verschaltungsrelevante Geräteparameter seitens des Systems ändern, so findet ein Abgleich mithilfe des Synchronisationsmittels statt.

Die verschaltungsrelevanten Parameter haben bei der grafischen Parametrierung bzw. Programmierung vorzugsweise entsprechende Abbildungen in Form von Verbindungen zwischen Ein- und Ausgängen. Ein Ändern dieser Verbindungen bzw. Daten bei der grafischen Parametrierung bzw. Programmierung hat somit unmittelbare Auswirkung auf den Steuerungsmanager bzw. den Geräteparametermanager.

Mithilfe der Gerätebeschreibungsdatei kann somit das Engineering System die graphische Benutzeroberfläche versorgen.

In einer weiteren Ausführungsform der Erfindung ist der Geräteparameter-Manager dazu eingerichtet, die verschaltungsrelevanten Geräteparameter in einen dem Engineering System zugänglichen Speicher zu laden.

Hierbei sind die verschaltungsrelevanten Gerätearameter von Feldgeräten sowie Steuerungen gemeint, die dem Engineering System noch nicht bzw. noch nicht vollständig bekannt sind. Dies ermöglicht es, dass das Engineering System nicht von vornherein alle Parameterdaten der Feldgeräte sowie der Steuerung kennen muss. Es genügt, dass die verschaltungsrelevanten Geräteparameter beispielsweise von den angeschlossene Feldgeräten oder der angeschlossenen Steuerung direkt, aus dem Internet, von dem Gerät beiliegende Speichermedien, etc. in einen dem Engineering System zugänglichen Speicher geladen werden.

In einer weiteren Ausführungsform der Erfindung weist die graphische Benutzeroberfläche Mittel zur graphischen Programmierung auf.

Bei der dialogbasierten Parametrierung werden die Parameter in Listen bzw. Masken dargestellt. Der Projekteur kann einen Parameter durch Eingabe eines neuen Wertes in die Liste bzw. in der Maske ändern. Bei der grafischen Parametrierung hingegen werden Parameter zu Funktionsbausteine zusammengefasst. Durch eine grafische Verschaltung der Funktionsbausteine in einem Verschaltungsplan werden Parameter geändert. Solche Verschaltungspläne können in einer hierarchischen Struktur organisiert werden. Die graphische Parametrierung erleichtert somit dem Projekteur enorm seine Arbeit und zudem können komplexe Sacherverhalte übersichtlich und gut strukturiert visualisiert werden. Eine derartige grafische Programmierung ermöglicht es zudem, dass ein Projekteur keine tiefgehende Programmierkenntnisse besitzen muss.

Der Projekteur kann somit mit nur einem Engineering System eine grafische Parametrierung der Feldgeräte sowie eine grafische Programmierung der speicherprogrammierbaren Steuerungen durchführen. Beide Systeme verbindet eine Reihe von Gemeinsamkeiten hinsichtlich der Funktionalität sowie fest verknüpfter Zustände, für Parameteränderungen seitens der Steuerung und der Feldgeräte. Gemeinsamkeiten sind beispielsweise, dass dem Projekteur grafische Funktionsbausteine mit Eingängen, Ausgängen und Parametern angeboten werden. Mit Hilfe dieser Funktionsbausteine sowie der jeweiligen Verbindung können Systeme und Zustände abgebildet werden. Anhand dieser grafischen Verschaltung und der daraus resultierenden Verschaltungsinformationen kann der Geräteparameter-Manager Feldgeräte editieren und der Steuerungs-Manager ein Steuerungsprogramm für eine Steuerung programmieren. Dadurch, dass sowohl die Parametrierung der Feldgeräte sowie die Programmierung der Steuerung mit Hilfe dieser grafischen Visualisierung mit Funktionsbausteinen erfolgen kann, ist es vorteilhaft, wenn für beide "Subsysteme" eine ähnliche grafische Darstellung verwendet wird (z.B. für Titel, Kommentare, Leiste mit Eingängen, Leiste mit Ausgängen, etc.). Über einen Funktionskatalog sollten dem Projekteur beispielsweise Funktionsbausteine zur Auswahl angeboten werden. Diese Funktionsbausteine können in einem grafischen Plan platziert werden. Die Ein- und Ausgänge der Funktionsbausteine können in dem Plan grafisch miteinander verschaltet werden. Auch eine planübergreifende Verschaltung ist vorstellbar. Dem Projekteur sollten Werkzeuge zur einfachen Bearbeitung der Verschaltungsstruktur zur Verfügung stehen (z.B. Kopieren, Einfügen, Verschieben, Löschen, Kommentare, etc.).

In einer weiteren Ausführungsform der Erfindung weist das Engineering System Mittel zur Beschränkung der graphischen Programmierung auf den Funktionsumfang der Steuerung und an die Steuerung angeschlossener Feldgeräte auf.

Hierdurch sollte der Funktionskatalog der graphischen Benutzeroberfläche auf den Funktionsumfang beschränkt werden, der letztendlich auch dem Projekteur mit seinen angeschlossenen Geräten zur Verfügung steht. Auf diese Weise kann ein versehentliches fehl programmieren hinsichtlich der tatsächlich vorhandnen Komponenten vermieden werden.

In einer weiteren Ausführungsform der Erfindung weist das Engineering System Mittel zur Beschränkung der graphischen Programmierung auf den Funktionsumfang einer von einem Benutzer ausgewählten Steuerung und ausgewählter Feldgeräte auf.

Dies ermöglicht es, dass eine Benutzer/Projekteur zunächst seine Komponenten auswählt und anschließend die Parametrierung und Programmierung durchführt. Hierbei würde ihm das Engineering System lediglich die ihm zur Verfügung stehenden Varianten anbieten. Auf diese Weise kann ein versehentliches fehl programmieren hinsichtlich der tatsächlich vorhandnen Komponenten vermieden werden.

In einer weiteren Ausführungsform der Erfindung weist die Benutzeroberflache des Engineering Systems ein einheitliches Frontend zur Parametrierung der Feldgeräte sowie zur Programmierung der Steuerung auf.

Durch eine einheitliche Visualisierung seitens des Frontendes innerhalb eines Engineering Systems kann sich ein Projekteur viel einfacher und schneller zu Recht finden. Durch die Gemeinsamkeiten des Geräteparametermanager und des Steuerungs-managers kann eine einheitliche Menüführung und somit ein einheitliches Frontende erfolgen. Insbesondere bei der grafischen Programmierung sollte darauf geachtet werden, dass die Programmierung mit Hilfe einheitlicher Funktionsbausteine erfolgt.

Unabhängig von der Tatsache, dass dem Projekteur eine einheitliche Benutzeroberfläche zur grafischen Programmierung der Steuerung sowie zur grafischen Parametrierung der Feldgeräte zur Verfügung gestellt wird, sind doch die Ergebnisse beider Vorgänge völlig unterschiedlich. Bei der Parametrierung der Geräte entstehen Datensätze, in denen die Geräteparameter (verschaltungsrelevant & nicht verschaltungsrelevant) hinterlegt sind. Diese Verarbeitung erfolgt im Geräteparameter-Manager, welcher letztendlich die Feldgeräte parametriert. Der Steuerungsmanager hingegen verarbeitet die grafische Programmierung und somit die Verschaltungsinformationen zu einem Steuerungsprogramm. Mit Hilfe dieses Steuerungsprogramms wird letztendlich die Steuerung programmiert. Somit werden durch ein Engineering System zwei teilweise unterschiedliche Systeme vereint und die Synergien beider Systeme werden optimal genutzt.

Im Folgenden wird die Erfindung und Ausgestaltung der Erfindung anhand der in den Figuren dargestellten Ausführungsbeispiele näher beschrieben und erläutert. Es zeigen:
- FIG 1: ein schematischer Aufbau eines Engineering Systems mit einer graphischen Benutzeroberfläche, einem Steuerungs-Manager und einem Synchronisationsmittel,
- FIG 2: ein schematischer Aufbau des Engineering Systems aus Figur 1 mit einem Geräteparameter-Manager und
- FIG 3: ein schematischer Aufbau eines Engineering Systems mit einer graphischen Benutzeroberfläche.

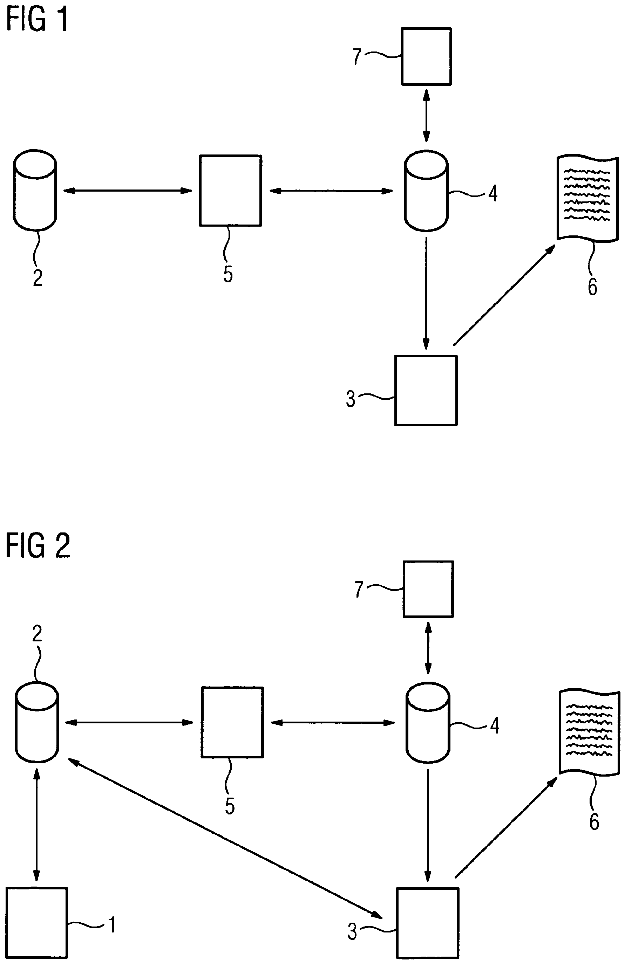

FIG 1 zeigt einen schematischen Aufbau eines Engineerig Systems mit einer graphischen Benutzeroberfläche 7, einem Steuerungs-Manager 3 und einem Synchronisationsmittel 5. Das Synchronisationsmittel 5 synchronisiert die verschaltungsrelevanten Geräteparameter 2 mit den Verschaltungsinformationen 4. Die Verschaltungsinformationen 4 werden anhand einer graphischen Benuteroberfläche 7 visualisiert. Über diese graphische Benutzeroberfläche 7 kann eine Parametrierung und Programmierung der Verschaltungsinformationen 4 für die Feldgeräte sowie für die Steuerung erfolgen. Mithilfe der Verschaltungsinformationen 4 kann der Steuerungs-Manager 3 ein Steuerungsprogramm 6 generieren.

FIG 2 zeigt einen schematischen Aufbau des Engineering Systems aus Figur 1 mit einem Geräteparameter-Manager 1. Mithilfe des Geräteparameter-Managers 1 können die verschaltungsrelevanten Geräteparameter 2 des Engineering Systems sowie die verschaltungsrelevanten Geräteparameter 2 der Feldgeräte bzw. der Steuerung gelesen, editiert und abgeglichen werden.

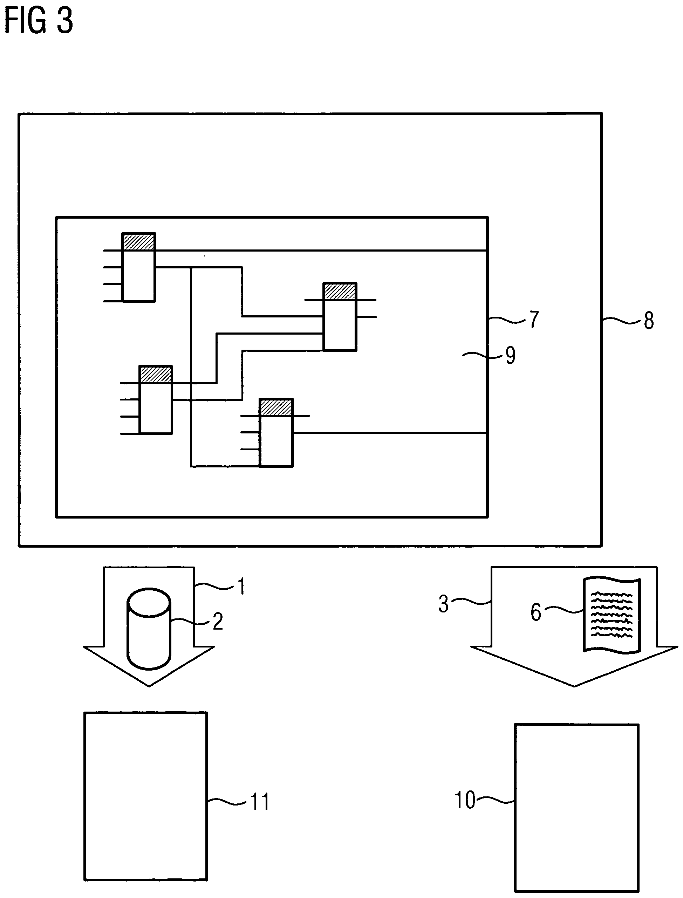

FIG 3 zeigt einen schematischen Aufbau eines Engineering Systems 8 mit einer graphischen Benutzeroberfläche 7. Über die graphischen Benutzeroberfläche 7 des Engineering Systems 8 kann, eine graphische Parametrierung 9 (mithilfe von Funktionsbausteine und deren Verbindung untereinander), eine Programmierung der Steuerung 10 sowie Parametrierung der Feldgeräte 11 erfolgen. Eine dialogbasierte Parametrierung oder eine Kombination aus dialogbasierter und graphischer Parametrierung ist ebenso denkbar. Durch die graphische Parametrierung 9 liegen dem Engineering System 8 Verschaltungsinformationen vor. Mithilfe dieser Verschaltungsinformationen kann der Steuerungsmanager 3 mit einem Steuerungsprogramm 6 die Steuerung 10 programmieren. Der Geräteparameter-Manager 1 kann anhand der Verschaltungsinformationen und der dadurch generierten bzw. abgeglichen verschaltungsrelevanten Geräteparameter 2 die Feldgeräte 11 parametrieren.

## Patentansprüche

1. Engineering System (8) zur Programmierung einer Steuerung (10) und zur Parametrierung von Feldgeräten (11), wobei das Engineering System (8) umfasst:
- eine graphische Benutzeroberfläche (7) zur Visualisierung und Editierung von Verschaltungsinformationen (4) bezüglich der Feldgeräte (11) und der Steuerung (10),
- einen Steuerungs-Manager (3) zur Generierung eines Steuerungsprogramms (6) für die Steuerung (10) aus den Verschaltungsinformationen (4) und
- ein Synchronisationsmittel (5) zur Synchronisierung verschaltungsrelevanter Geräteparameter (2) mit den Verschaltungsinformationen (4),
wobei das Engineering System (8) einen Geräteparameter-Manager (1) zum Lesen und Editieren der verschaltungsrelevanten Geräteparameter (2) aufweist.

2. Engineering System (8) nach Anspruch 1,
wobei der Geräteparameter-Manager (1) dazu ausgeführt ist, die verschaltungsrelevanten Geräteparameter (2) aus einer Gerätebeschreibungsdatei, welche auf einem Gerät untergebracht ist, zu lesen und zu editieren.

3. Engineering System (8) nach einem der vorhergehenden Ansprüche,
wobei der Geräteparameter-Manager (1) dazu eingerichtet ist, die verschaltungsrelevanten Geräteparameter (2) in einen dem Engineering System (8) zugänglichen Speicher zu laden.

4. Engineering System (8) nach einem der vorhergehenden Ansprüche,
wobei die graphische Benutzeroberfläche (7) Mittel zur graphischen Programmierung (9) aufweist.

5. Engineering System (8) nach Anspruch 4,
wobei das Engineering Systems (8) Mittel zur Beschränkung der graphischen Programmierung (9) auf den Funktionsumfang der Steuerung (10) und an die Steuerung (10) angeschlossener Feldgeräte (11) aufweist.

6. Engineering System (8) nach Anspruch 4 oder 5,
wobei das Engineering Systems (8) Mittel zur Beschränkung der graphischen Programmierung (9) auf den Funktionsumfang einer von einem Benutzer ausgewählten Steuerung (10) und ausgewählter Feldgeräte (11) aufweist.

7. Engineering System (8) nach einem der vorhergehenden Ansprüche,
wobei die Benutzeroberflache (7) des Engineering Systems (8) ein einheitliches Frontende zur Parametrierung der Feldgeräte (11) sowie zur Programmierung der Steuerung (10) aufweist.

8. Speichermedium, wobei das Speichermedium ein Engineering System (8) nach einem der Ansprüche 1 bis 6 aufweist.

## Claims

1. Engineering system (8) for programming a control (10) and setting the parameters of field devices (11), wherein the engineering system (8) comprises:
- a graphical user interface (7) for visualising and editing interconnection information (4) relating to the field devices (11) and the control (10),
- a control manager (3) for generating a control program (6) for the control (10) from the interconnection information (4) and
- a synchronisation means (5) for synchronising interconnection-relevant device parameters (2) with the interconnection information (4),
wherein the engineering system (8) has a device parameter manager (1) for reading and editing the interconnection-relevant device parameters (2).

2. Engineering system (8) according to claim 1,
wherein the device parameter manager (1) is configured to read and edit the interconnection-relevant device parameters (2) from a device description file, which is stored on a device.

3. Engineering system (8) according to one of the preceding claims,
wherein the device parameter manager (1) is configured to load the interconnection-relevant device parameters (2) into a memory which is accessible to the engineering system (8).

4. Engineering system (8) according to one of the preceding claims,
wherein the graphical user interface (7) has means for graphical programming (9).

5. Engineering system (8) according to claim 4,
wherein the engineering system (8) has means for restricting the graphical programming (9) to the range of functions of the control (10) and field devices (11) connected to the control (10).

6. Engineering system (8) according to claim 4 or 5,
wherein the engineering system (8) has means for restricting the graphical programming (9) to the range of functions of a control (10) selected by a user and selected field devices (11).

7. Engineering system (8) according to one of the preceding claims,
wherein the user interface (7) of the engineering system (8) has a unified front end for setting the parameters of the field devices (11) as well as for programming the control (10).

8. Storage medium, wherein the storage medium has an engineering system (8) according to one of claims 1 to 6.

## Revendications

1. Système ( 8 ) d'ingénierie pour programmer une commande ( 10 ) et pour paramétrer des appareils ( 11 ) sur site, le système ( 8 ) d'ingénierie comprenant :
- une surface ( 7 ) utilisateur graphique de visualisation et d'édition d'informations ( 4 ) de câblage se rapportant aux appareils ( 11 ) sur site et à la commande ( 10 ),
- un gestionnaire ( 3 ) de commande pour créer un programme ( 6 ) de commande pour la commande ( 10 ), à partir des informations ( 4 ) de câblage et
- un moyen ( 5 ) de synchronisation pour synchroniser des paramètres ( 2 ) d'appareil pertinents pour le câblage avec les informations ( 4 ) de câblage,
dans lequel le système ( 8 ) d'ingénierie a un gestionnaire ( 1 ) de paramètres d'appareil pour déchiffrer et éditer les paramètres ( 2 ) d'appareil pertinents pour le câblage.

2. Système ( 8 ) d'ingénierie suivant la revendication 1,
dans lequel le gestionnaire ( 1 ) de paramètres d'appareil est réalisé pour déchiffrer et éditer les paramètres ( 2 ) d'appareil pertinents pour le câblage dans un fichier de description d'appareil logé sur un appareil.

3. Système ( 8 ) d'ingénierie suivant l'une des revendications précédentes,
dans lequel le gestionnaire ( 1 ) de paramètres d'appareil est conçu pour charger les paramètres ( 2 ) d'appareil pertinents pour le câblage dans une mémoire accessible au système ( 8 ) d'ingénierie.

4. Système ( 8 ) d'ingénierie suivant l'une des revendications précédentes,
dans lequel la surface ( 7 ) utilisateur graphique a des moyens de programmation ( 9 ) graphique.

5. Système ( 8 ) d'ingénierie suivant la revendication 4,
dans lequel le système ( 8 ) d'ingénierie a des moyens de limitation de la programmation ( 9 ) graphique à la périphérie fonctionnelle de la commande ( 10 ) et à la commande ( 10 ) d'appareils ( 11 ) sur site raccordés.

6. Système ( 8 ) d'ingénierie suivant la revendication 4 ou 5,
dans lequel le système ( 8 ) d'ingénierie a des moyens de limitation de la programmation ( 9 ) graphique à la périphérie fonctionnelle d'une commande ( 10 ) sélectionnée par un utilisateur et d'appareils ( 11 ) sur site sélectionnés.

7. Système ( 8 ) d'ingénierie suivant l'une des revendications précédentes,
dans lequel la surface ( 7 ) utilisateur du système ( 8 ) d'ingénierie a une extrémité avant unitaire de paramétrage des appareils ( 11 ) sur site ainsi que de programmation de la commande ( 10 ).

8. Support de mémoire, le support de mémoire ayant un système ( 8 ) d'ingénierie suivant l'une des revendications 1 à 6.
